(19) Europäisches Patentamt
European Patent Office
Office européen des brevets

(11) **EP 3 395 992 B1**

(12) **EUROPEAN PATENT SPECIFICATION**

(45) Date of publication and mention
of the grant of the patent:
**15.04.2020 Bulletin 2020/16**

(51) Int Cl.:
*C22C 38/38* (2006.01)      *C22C 38/34* (2006.01)
*C22C 38/32* (2006.01)      *C22C 38/28* (2006.01)
*C22C 38/26* (2006.01)      *C22C 38/24* (2006.01)
*C22C 38/22* (2006.01)      *C22C 38/00* (2006.01)
*C23C 2/06* (2006.01)      *C21D 8/02* (2006.01)
*C22C 38/02* (2006.01)      *C22C 38/04* (2006.01)
*C22C 38/06* (2006.01)      *C21D 6/00* (2006.01)
*C21D 6/02* (2006.01)      *C21D 9/46* (2006.01)

(21) Application number: **16879189.5**

(22) Date of filing: **21.11.2016**

(86) International application number:
**PCT/KR2016/013407**

(87) International publication number:
**WO 2017/111322 (29.06.2017 Gazette 2017/26)**

(54) **SUPER STRENGTH HOT-ROLLED STEEL SHEET EXCELLENT DUCTILITY AND MANUFACTURING THEREFOR**

HOCHFESTES WARMGEWALZTES STAHLBLECH MIT HERVORRAGENDER DUKTILITÄT UND HERSTELLUNG DAVON

TÔLE D'ACIER LAMINÉE À CHAUD, ULTRA-RÉSISTANTE, PRÉSENTANT UNE EXCELLENTE DUCTILITÉ ET FABRICATION ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2015 KR 20150184512**

(43) Date of publication of application:
**31.10.2018 Bulletin 2018/44**

(73) Proprietor: **Posco**
**Pohang-si, Gyeongsangbuk-do 37859 (KR)**

(72) Inventors:
• **KIM, Sung-Il**
**Gwangyang-si**
**Jeollanam-do 57807 (KR)**

• **SEO, Seok-Jong**
**Gwangyang-si**
**Jeollanam-do 57807 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(56) References cited:
EP-A1- 2 719 788        EP-A1- 2 824 209
WO-A1-2013/004910       JP-A- 2004 068 095
JP-A- 2006 183 141      JP-A- 2006 183 141
JP-A- 2008 038 247      JP-A- 2008 069 425
JP-A- 2015 113 500      JP-A- 2015 113 500
KR-A- 20140 027 451

**Description**

[Technical Field]

The present inventive concept relates to a ultra high strength hot-rolled steel sheet having excellent ductility and method for manufacturing the same.

[Background Art]

Ultra high strength steels are used in impact absorption members, bumpers, and reinforcing members for automobiles, and have a tensile strength of 1 GPa or more. Such steels may contain an appropriate amount of a retained austenite phase, thereby being easily molded to become parts and having superior impact resistance characteristics due to high strength thereof, even after molding.

Recently, various methods of fabricating ultra high strength steels have been suggested. In particular, in order to obtain a tensile strength of 1GPa or more and simultaneously secure an elongation of 10% or more, a hot-rolled quenching and partitioning (Q&P) steel utilizing a transformation induced plasticity (TRIP) phenomenon caused by the retained austenite phase has been developed. The Q&P steel may be fabricated by heating a steel to a temperature at which an austenite single phase or an austenite-ferrite dual phase exists to perform a heat treatment for homogenization for a certain period of time, quenching the heated steel to a temperature between a martensite transformation start temperature (Ms) and a martensite transformation end temperature (Mf) thereby forming a martensite phase and a retained austenite phase, and maintaining the quenched steel at a cooling end temperature or heating the quenched steel to a temperature slightly higher than Ms to perform a heat-treatment thereby stabilizing the retained austenite phase.

Such a concept of fabricating the Q&P steel has been suggested by a professor J.G. Speer (Colorado School of Mines, US), et al., as disclosed in Non-Patent Document 1 and Non-Patent Document 2 below. However, there is a problem in that the method in which the process of reheating the steel to a temperature at which the austenite-ferrite dual phase or the austenite single phase exists is added to an ordinary hot-rolling process may require high manufacturing costs.

In order to solve the problem, a method of obtaining the Q&P steel by use of Cr, Ti, Al, and the like, during a cooling process after the ordinary hot-rolling process, has been suggested as disclosed in Patent Documents 1 to 3. However, when Cr and Al are additionally used, the weldability of the steel may deteriorate and material differences between an edge portion and a center portion in a steel sheet may become severe due to an abnormal increase in hardenability of the steel. In addition, when Ti is additionally used, it is difficult to obtain sufficient ductility and bending properties since a fraction of the retained austenite phase decreases due to formation of carbide at a high temperature.

Further, Patent Document EP2719788 discloses ultra high strength and hot rolled steel sheets.

[References Cited]

(Patent Document 1) Chinese Patent Application No. 2012-10461655
(Patent Document 2) Chinese Patent Application No. 2012-10461022
(Patent Document 3) Chinese Patent Application No. 2013-10121568

(Non-Patent Document 1) J.G. Speer, D.V. Edmonds, F.C.Rizzo, D.K.Matlock: Curr. Opin. Solid State Mater. Sci. 8(2004) 219-237.
(Non-Patent Document 2) G.A. Thomas, J.G. Speer, and D.K.Matlock: AIST Trans., 2008, vol. 5 (5), pp. 209-217.

[Disclosure]

[Technical Problem]

An aspect of the present inventive concept may provide a ultra high strength hot-rolled steel sheet having excellent ductility by precisely controlling alloy compositions, and a manufacturing method thereof, without significantly changing existing processes of fabricating a hot-rolled steel sheet, and a method of manufacturing the same.

The present invention is set out in the claims.

[Technical Solution]

According to an aspect of the present inventive concept, a ultra high strength hot-rolled steel sheet having excellent ductility is defined in claim 1.

According to another aspect of the present inventive concept, a method of fabricating a ultra high strength hot-rolled steel sheet having excellent ductility is defined in claim 3.

Various features, advantages, and effects of the present inventive concept can be understood in more detail with reference to following example embodiments.

[Advantageous Effects]

A ultra high strength hot-rolled steel sheet having excellent ductility according to the present inventive concept can be usefully applied to impact absorption members, bumpers, and reinforcing members for automobiles, and a method of fabricating the same.

[Description of Drawings]

FIG. 1 is a graph illustrating values of Relational Expressions 1 and 2 according to inventive steels and comparative steels; and
FIG. 2 is a graph illustrating coiling temperatures and values of Relational Expression 3 according to inventive steels and comparative steels.

[Modes for Carrying out the Invention]

Hereinafter, example embodiments of the present inventive concept will be described with reference to the accompanying drawings. The present inventive concept may, however, be exemplified in many different forms and should not be construed as being limited to the specific embodiments set forth herein. Rather, these embodiments are provided so that this disclosure will be thorough and complete, and will fully convey the scope of the disclosure to those skilled in the art. The scope of the disclosure is only limited by the appended claims.

Inventors of the present inventive concept have deeply studied to solve the above-described problems, resulting in providing a ultra high strength hot-rolled steel sheet having excellent ductility by precisely controlling alloy compositions, and a manufacturing method thereof, without significantly changing existing processes of fabricating a hot-rolled steel sheet, and a method of manufacturing the same.

Hereinafter, a ultra high strength hot-rolled steel sheet having excellent ductility according to an example embodiment of the present invention will be described in detail.

The ultra high strength hot-rolled steel sheet having excellent ductility according to the example embodiment of the present invention includes 0.15% to 0.25% carbon (C), 0.6% to 2.0% silicon (Si), 1.5% to 3.0% manganese (Mn), 0.01% to 0.1% aluminum (Al), 0.01% to 0.5% chrome (Cr), 0.005% to 0.2% molybdenum (Mo), 0.001% to 0.05% phosphorus (P), 0.001% to 0.05% sulfur (S), 0.001% to 0.01% nitrogen (N), 0.003% to 0.1% niobium (Nb), 0.003% to 0.1% titanium (Ti), 0.003% to 0.1% vanadium (V), 0.0005% to 0.005% boron (B), a balance of iron (Fe) and unavoidable impurities, by weight percentage, and satisfy the following relational expressions 1 and 2.

$$[\text{Relational Expression 1}]$$

$$4.5 \leq [\text{Mn}]+12[\text{sol.C}]+2.5[\text{Mo}]+2[\text{Cr}]+300[\text{B}]+[\text{V}] \leq 5.3$$

$$[\text{Relational Expression 2}]$$

$$[\text{sol.C}] = [\text{C}]-(0.25[\text{Ti}]+0.13[\text{Nb}]+0.125[\text{Mo}]), \; 0.17 \leq$$

$$[\text{sol.C}] \leq 0.22$$

(Here, each element symbol represents a content (% by weight) of the element in Relational Expression 1 and Relational Expression 2.)

First, alloy compositions of the ultra high strength hot-rolled steel sheet having excellent ductility according to the example embodiment of the present invention will be described in detail. Hereinafter, a unit of each alloy element is % by weight.

C: 0.15 to 0.25%

Carbon (C) is the most economical and effective element for increasing the hardenability of a steel to strengthen the steel and easily secure the stability of a retained austenite phase. As the content of C increases, a martensite phase and a bainite phase may increase and thereby a tensile strength of the steel may increase.

When the content of C is lower than 0.15%, the retained austenite phase may become unstable. On the other hand, when the content of C exceeds 0.25%, there may be problems in that the hot-rolled steel sheet may have poor weldability, material differences by position in the hot-rolled steel sheet may increase, since microstructural variations increase with a cooling rate, and ductility and shearing workability may be decreased. Accordingly, the content of C is in the range of 0.15% to 0.25%.

Si: 0.6% to 2.0%

Silicon (Si) functions to deoxidize molten steel, has a solid solution strengthening effect, and is advantageous for forming a retained austenite phase by retarding the formation of coarse carbides.

When the content of Si is lower than 0.6%, it is difficult to stabilize the retained austenite phase since the effect of retarding the formation of coarse carbides is insignificant. On the other hand, when the content of Si exceeds 2.0%, the hot-rolled steel sheet may have poor weldability. Accordingly, the content of Si is in the range of 0.6% to 2.0%.

Mn: 1.5% to 3.0%

Manganese (Mn), as well as silicon (Si), is an effective element for strengthening a solid solution of steel, and enhances hardenability of a steel to facilitate formation of a martensite phase.

When the content of Mn is lower than 1.5%, the above-described effects may not be obtained. On the other hand, when the content of Mn exceeds 3.0%, the hardenability of the steel may excessively increase and thereby it may become difficult to obtain a preferred microstructure of the hot-rolled steel sheet. In addition, segregation may be greatly developed in a mid-thickness region during a slab-molding operation in a continuous casting process, and the quality of the slab may deteriorate. Further, the microstructure may become nonuniform in a thickness direction during cooling after hot rolling, and the hot-rolled steel sheet may have poor weldability. Accordingly, the content of Mn is in the range of 1.5% to 3.0%.

Cr: 0.01% to 0.5%

Chrome (Cr) may strengthen solid solution of steel and increase hardenability of the steel, resulting in strengthening of the steel. However, when the content of Cr is lower than 0.01%, the above-described effects may not be obtained. On the other hand, when the content of Cr exceeds 0.5%, segregation may be greatly developed at a mid-thickness region and the microstructures may become nonuniform in the thickness direction, similarly to the case of Mn. Therefore, formability and weldability may deteriorate. Accordingly, the content of Cr is restricted within the range of 0.01% to 0.5%.

Mo: 0.005% to 0.2%

Molybdenum (Mo) may strengthen a solid solution of steel and increase hardenability of the steel, thereby strengthening the steel. In addition, when Mo is added together with niobium (Nb), titanium (Ti), or the like, it may also contribute to formation of carbide thereby stabilizing solid solution carbon. However, when the content of Mo is lower than 0.005%, the above-described effects may not be obtained. On the other hand, when the content of Mo exceeds 0.2%, quenching properties may abnormally increase and thereby the martensite phase may be easily formed while the stable retained austenite phase is barely formed. In addition, economic efficiency may be lowered and weldability may also deteriorate. Accordingly, the content of Mo is in the range of 0.005% to 0.2%.

P: 0.001% to 0.05%

Phosphorus (P), similar to Si, may have a solid solution strengthening effect and a ferrite-transformation promoting effect simultaneously. However, excessive manufacturing costs may be required to maintain the content of P at a level lower than 0.001%, which is disadvantageous in economical aspects. In addition, a content of P lower than 0.001% is insufficient to obtain high strength. On the other hand, when the content of P exceeds 0.05%, embrittlement may increase due to segregation in grain boundaries to generate microcracks during a shearing process and greatly degrade ductility and impact resistance characteristics. Accordingly, the content of P is restricted within the range of 0.001% to 0.05%.

S: 0.001% to 0.01%

Sulfur (S) exists in steel as an impurity. When the content of S exceeds 0.01%, it may form nonmetallic inclusions by combining with Mn or the like. As a result, microcracks may occur during a shearing process of steel, and elongation flange formability and impact resistance may significantly deteriorate. In addition, since it takes a large amount of time to maintain the content of S at a level lower than 0.001% in a steel manufacturing process, productivity may decrease. Accordingly, the content of S is in the range of 0.001% to 0.01%.

Sol.Al: 0.01% to 0.1%

Soluble aluminum (Sol.Al) may be a component added mainly for deoxidation of the steel. When the content of Sol.Al is lower than 0.01%, the effect of addition of Sol.Al may be negligible. On the other hand, when the content of Sol.Al exceeds 0.1%, it may combine with N to form AlN, which generates corner cracks in the slab during a continuous casting process and defects due to formation of inclusions at edge portions of the hot-rolled steel sheet. Accordingly, the content of Sol.Al is in the range of 0.01% to 0.1%.

N: 0.001% to 0.01%

Nitrogen (N), as well as C, is a representative solid solution strengthening element, and forms coarse precipitates together with Ti, Al, and the like. Normally, the solid solution strengthening effect of N may be superior to that of C, but there is a problem in that toughness greatly decreases as the content of N in steel increases. In addition, since it takes a large amount of time to maintain the content of N at a level lower than 0.001% in a steel manufacturing process, productivity may decrease. Accordingly, the content of N is in the range of 0.001% to 0.01%.

Ti: 0.003% to 0.1%

Titanium (Ti), as well as niobium (Nb) and vanadium (V), is a representative precipitation strengthening element, and has strong affinity with N to form coarse TiN in the steel. TiN may have an effect of suppressing grain growth during a heating process for the hot rolling of the steel. In addition, Ti remaining after reacting with N may combine with solid solution C in the steel to form TiC precipitates, which may improve the strength of the steel.
However, when the content of Ti is lower than 0.003%, the above-described effects may not be obtained. On the other hand, when the content of Ti exceeds 0.10%, coarse TiN may be formed to generate microcracks during the shearing process and decrease the solid solution carbon in the steel thereby reducing the stability of the retained austenite phase. Accordingly, the content of Ti is in the range of 0.003% to 0.1%.

Nb: 0.003% to 0.1%

Niobium (Nb), as well as Ti and vanadium (V), is a representative precipitation strengthening element, and may be precipitated during hot rolling, which leads to the refinement of grains through retarding recrystallization. Accordingly, Nb is an effective element for enhancing the strength and impact toughness of the steel. However, when the content of Nb is lower than 0.003%, the above-described effects may not be obtained. On the other hand, when the content of Ti exceeds 0.1%, there are problems in that recrystallization during hot rolling may be abnormally retarded resulting in formation of elongated grains, and deformation resistance may increase resulting in difficulties in hot rolling of the steel sheet and degradation in shape quality. In addition, the solid solution carbon may decrease and the stability of the retained austenite phase may also decrease. Accordingly, the content of Nb is in the range of 0.003% to 0.1%.

V: 0.003% to 0.1%

Vanadium (V), as well as Ti and Nb, is a representative precipitation strengthening element, and mainly forms precipitates after coiling to improve the strength of the steel and also increase hardenability of the steel. However, when the content of V is lower than 0.003%, the above-described effects may not be obtained, and when the content of V exceeds 0.1%, shearing workability may deteriorate due to the formation of coarse complex precipitates and it may be difficult to control microstructures due to an abnormal increase in hardenability. In addition, it may be unfavorable in economical aspects to maintain the content of P at a level higher than 0.1%. Accordingly, the content of V is in the range of 0.003% to 0.1%.

B: 0.0005% to 0.005%

Boron (B) is a representative grain boundary stabilizing element which retards recrystallization during hot rolling and ferrite transformation during cooling after hot rolling, and thereby increasing hardenability. Even a very small amount of B may markedly increase hardenability. However, when the content of B is lower than 0.0005%, the above-described effects may not be obtained. On the other hand, when the content of B exceeds 0.005%, it may be difficult to hot-roll the steel sheet due to the increase in the deformation resistance during hot rolling. In addition, it may be difficult to control microstructures of the steel due to the abnormal increase in hardenability. Accordingly, the content of B is in the range of 0.0005% to 0.005%.

Another component according to the example embodiments of the present inventive concept is iron (Fe). However, in an ordinary steel manufacturing process, it is inevitable that unintended impurities may be introduced from raw materials and the surrounding environment. Since such impurities are commonly known to those skilled in the art, the entire contents thereof will not be specifically described in the present specification.

It is necessary that a ultra high strength hot-rolled steel sheet having excellent ductility according to example embodiments of the present invention satisfies the following Relational Expressions 1 and 2 as well as the above-described alloy compositions.

When the following Relational Expression 1 and Relational Expression 2 are satisfied, it is easy to form uniform martensite structures and to stabilize untransformed retained austenite phases.

In the following Relational Expression 1 and Relational Expression 2, each element symbol represents a content (% by weight) of the element.

[Relational Expression 1]

$$4.5 \le [Mn]+12[sol.C]+2.5[Mo]+2[Cr]+300[B]+[V] \le 5.3$$

Relational Expression 1 relates to quenching properties and segregation of steel. In particular, each component included in Relational Expression 1 may improve hardenability of the steel thereby facilitating formation of the martensite phase. However, C, Mn, and Cr may be easily segregated in a center portion of a steel sheet to form nonuniform microstructures in a thickness direction and degrade weldability. Accordingly, when a value of Relational Expression 1 is lower than 4.5, the quenching properties of the steel may be degraded, and when the value of Relational Expression 1 exceeds 5.3, microstructures of the steel may become nonuniform, and thereby weldability may be degraded.

[Relational Expression 2]

$$[sol.C] = [C] - (0.25[Ti] + 0.13[Nb] + 0.125[Mo]),$$
$$0.17 \le [sol.C] \le 0.22$$

Relational Expression 2 defines components related to formation of precipitates in a steel. Since the formation of precipitates relates to the contents of Ti, Nb, Mo, and C in the steel, confirmation of the content of solid solution carbon ([sol.C]) contributing the stability of the retained austenite phase may be required. When the content of [sol.C] is lower than 0.17, it is difficult to sufficiently stabilize the retained austenite phase. When the content of [sol.C] is higher than 0.22, the formation of a large amount of fine precipitates may contribute to an increase in yield strength and formation of fine grains. However, quenching properties of the steel may increase thereby degrading weldability.

Meanwhile, the hot-rolled steel sheet of the present inventive concept has microstructures consisting of 85% or more the martensite phase, 3% to 15% the retained austenite phase, and other unavoidable phases, by area fraction.

When the content of the martensite phase is lower than 85%, it is difficult to secure sufficient tensile strength. In addition, when the content of the retained austenite phase is lower than 3%, elongation and formability may deteriorate, and when the content of the retained austenite phase exceeds 15%, it is difficult to form a sufficient martensite phase, resulting in degradation of the tensile strength.

Here, the unavoidable phases include ferrite, bainite, and the like, and the sum of the ferrite and bainite is lower than 5%. When the sum of the ferrite and bainite is 5% or more, the strength of the hot-rolled steel sheet may decrease.

In addition, the hot-rolled steel sheet according to the present inventive concept has a tensile strength of 1200MPa or greater, and an elongation of 10% or greater.

Meanwhile the hot-rolled steel sheet according to the example embodiment of the present inventive concept may include a galvanized layer formed on a surface thereof.

Hereinafter, a method of fabricating a ultra high strength hot-rolled steel sheet having excellent ductility according to the present inventive concept will be described in detail. The method of fabricating a ultra high strength hot-rolled steel sheet having excellent ductility according to the present inventive concept includes heating a slab satisfying the above-described alloy composition conditions and the Relational Expressions 1 and 2 at a temperature in a range between 1200°C and 1350°C, forming a hot-rolled steel sheet by hot rolling the heated slab at a temperature in a range between 850°C and 1150°C, cooling the hot-rolled steel sheet to a cooling end temperature in a range between 200°C and 400°C at an average cooling rate of 50 to 100°C/sec and coiling the cooled hot-rolled steel sheet, and loading the coiled hot-rolled steel sheet into a heating furnace to be heat-insulated or heated to a temperature in a range between 200°C to 400°C so as to satisfy a following relational expression 3.

Slab Heating Process

A slab having the above-described alloy compositions and satisfying Relational Expression 1 and Relational Expression 2 is heated to a temperature between 1200°C and 1350°C.

When the heating temperature of the slab is lower than 1200°C, since carbides, nitrides, and precipitates consisting of Ti, Nb, V, Mo, and the like may not be sufficiently re-solid-soluted, formation of precipitates may decrease in a subsequent process after hot-rolling, thereby retaining coarse TiN. On the other hand, when the heating temperature of the slab exceeds 1350°C, austenite grains may be abnormally grown thereby lowering the strength of the steel. Accordingly, the heating temperature of the slab is in the range between 1200°C and 1350°C.

Here, the slab may be produced in a process in which a continuous casting process and a hot-rolling process are directly combined. Since it is important to maintain the temperature of the steel slab in the range between 1200°C and 1350°C in order to maintain a proper hot-rolling temperature, the process in which the continuous casting process and the hot-rolling process are directly combined may preferably be applied.

Hot-rolling Process

The heated slab is hot-rolled at a temperature between 850°C and 1150°C to obtain a hot-rolled steel sheet.

When the hot-rolling process is started at a temperature higher than 1150°C, the temperature of the hot-rolled steel sheet is increased, thereby increasing the grain size of the hot-rolled steel sheet and degrading the surface quality of the hot-rolled steel sheet. In addition, when the hot-rolling process is started at a temperature lower than 850°C, elongated grains may be developed, thereby degrading the shape of the hot-rolled sheet since recrystallization may be abnormally delayed. In addition, quenching properties of the hot-rolled steel sheet may be reduced due to the formation of precipitates during the hot-rolling process, and stability of the retained austenite phase may decrease.

Accordingly, the hot-rolling process is performed at a temperature in the range between 850°C and 1150°C.

Cooling and Coiling Process

The hot-rolled steel sheet is cooled to a cooling end temperature in a range between 200°C to 400°C at an average cooling rate in a range between 50 to 100°C/sec, and coiled.

When the cooling end temperature is lower than 200°C, the microstructures of the steel may be fully phase-transitioned to the martensite phase, thereby increasing strength of the steel while decreasing ductility of the steel. When the cooling end temperature exceeds 400°C, the bainite phase may be formed thereby decreasing both of the strength and ductility of the steel.

In addition, when the average cooling rate is lower than 50°C/sec, it is difficult to secure a target quality of the steel since the ferrite phase or bainite phase may be formed resulting in nonuniform microstructures. When average cooling rate exceeds 100°C/sec, the microstructures of the steel sheet may be nonuniform in a thickness direction and a width direction, and shape quality may be degraded.

Heat-insulating or Heating Process

The coiled hot-rolled steel sheet is loaded into a heating furnace, and heat-insulated or heated to a temperature in a range between 200°C and 400°C so as to satisfy the following Relational Expression 3. After the heat treatment, such as heat-insulating or heating, the hot-rolled steel sheet may be cooled.

[Relational Expression 3]

T = Temp (25[sol.C] + Log(Time)), 2000 ≤T≤ 2500

(Here, Temp and Time in Relational Expression 3 respectively represent a temperature(°C) and time (minutes) of the heating furnace after the coiling process.)

Immediately after the coiling process is completed by hot rolling and cooling the steel sheet, untransformed phases may remain in the steel. The untransformed phases may form a stable retained austenite phase or be fully transformed into a martensite phase depending on subsequent thermal conditions.

Here, the coiled hot-rolled steel sheet is loaded into the heating furnace in a state in which the temperature of the coiled hot-rolled steel sheet is 200°C or higher. When the temperature is lower than 200°C before loading, the untransformed phases in the hot-rolled steel sheet may be partially or fully transformed into the martensite phase. In this case, since the retained austenite phase is not sufficiently formed, ductility and formability of the steel may significantly decrease while the strength of the steel significantly increases.

Accordingly, the heat treatment, such as heat-insulating or heatingis performed at the temperature satisfying Relational Expression 3 so that the stable retained austenite phase is formed in the steel.

Here, the temperature of the heat treatment is not higher than 400°C, since the content of the solid solution carbon is high in the untransformed phases due to the sufficient cooling rate of 50°C/sec or higher and the quenching properties of the steel. Accordingly, the stable retained austenite phase may be sufficiently secured only by the heat treatment satisfying Relational Expression 3. However, when the value of Relational Expression 3 is lower than 2000, the effect of the heat treatment may not be sufficient. As a result, the retained austenite phase may not be stabilized, thereby being transformed into the martensite phase. When the value of Relational Expression 3 exceeds 2500, the bainite phase may be formed due to diffusion of the solid solution carbon. Accordingly, the strength and ductility of the steel may decrease at the same time, and it may be economically disadvantageous to perform the heat treatment for an extended period of time.

The hot-rolled steel sheet by the above-described processes may have excellent ductility and strength such that the tensile strength thereof is 1200MPa or more and the ductility thereof is 10% or more.

Meanwhile, after the heat-insulating or heating process, a process of pickling and oiling the hot-rolled steel sheet may additionally be performed.

In addition, a process of heating the hot-rolled steel sheet to a temperature between 450°C and 480°C and hot-dip galvanizing the heated hot-rolled steel sheet may be added after the pickling process.

[MODES FOR INVENTION]

Hereinafter, example embodiments of the present inventive concept will be described in more detail. The present inventive concept may, however, be exemplified in many different forms and should not be construed as being limited to the specific embodiments set forth herein. The scope of the present invention is defined by the appended claims.

Hot-rolled steel sheets were fabricated by heating slabs having compositions listed in Table 1 below at a temperature of 1250°C under manufacturing conditions listed in Table 2 below.

In Table 1 below, the unit of each alloy element is weight percentage (wt%). In Table 2 below, FDT and CT represent a final hot-rolling ending temperature and a coiling temperature in a hot-rolling process, respectively, and Temp and Time represent a heat treatment temperature and a heat treatment time in a coil heating furnace, respectively. A cooling rate of the cooling process performed immediately after hot rolling, which is not illustrated in Table 2 below, was controlled to be in a range of 70 to 90°C/sec.

In addition, mechanical properties and microstructures of the fabricated hot-rolled steel sheets are listed in Table 3 below.

In Table 3 below, YS, TS, and T-El represent yield strength, tensile strength, and elongation, respectively. The tensile test was carried out on test pieces prepared according to Japanese Industrial Standard (JIS) #5 in a direction parallel to a rolling direction of a rolled steel sheet. The tensile test was carried out three times, and average values of the results thereof are listed in Table 3 below.

In addition, in Table 3 below, area fractions of bainite, martensite, ferrite, and retained austenite were measured at test pieces respectively obtained from center portions of rolled steel sheets. Each test piece was prepared and etched, and then observed using an optical microscope and a scanning electron microscope (SEM) and analyzed using an image analyzer. The area fraction of the retained austenite phase was obtained by analyzing the center portion of each rolled steel sheet using an electron back scattering diffraction (EBSD) method.

[Table 1]

| Division | C | Si | Mn | Cr | Al | P | S | N | Mo | Ti | Nb | V | B |
|---|---|---|---|---|---|---|---|---|---|---|---|---|---|
| C.Steel 1 | 0.22 | 1.01 | 1.62 | 0.7 | 0.03 | 0.012 | 0.003 | 0.005 | 0.01 | 0.02 | 0.03 | 0.004 | 0.001 |
| C.Steel 2 | 0.19 | 0.8 | 1.7 | 0.1 | 0.03 | 0.011 | 0.003 | 0.005 | 0.01 | 0.02 | 0.015 | 0.004 | 0.001 |
| C.Steel 3 | 0.19 | 0.62 | 1.55 | 0.2 | 0.035 | 0.015 | 0.003 | 0.004 | 0.1 | 0.03 | 0.015 | 0.005 | 0.001 |
| C.Steel 4 | 0.21 | 0.65 | 1.8 | 0.15 | 0.03 | 0.01 | 0.006 | 0.005 | 0.07 | 0.025 | 0.02 | 0.001 | 0.001 |
| C.Steel 5 | 0.23 | 0.7 | 1.6 | 0.4 | 0.03 | 0.01 | 0.004 | 0.004 | 0.01 | 0.04 | 0.03 | 0.001 | 0.0005 |
| C.Steel 6 | 0.18 | 0.8 | 1.82 | 0.1 | 0.035 | 0.01 | 0.003 | 0.005 | 0.06 | 0.005 | 0.005 | 0.001 | 0.001 |
| C.Steel 7 | 0.21 | 0.6 | 1.88 | 0.1 | 0.027 | 0.009 | 0.003 | 0.004 | 0.01 | 0.05 | 0.04 | 0.05 | 0.0015 |
| C.Steel 8 | 0.2 | 0.7 | 1. 65 | 0.15 | 0.03 | 0.01 | 0.003 | 0.004 | 0.1 | 0.02 | 0.03 | 0.003 | 0.002 |
| I.Steel 1 | 0.2 | 0.8 | 1.6 | 0.3 | 0.025 | 0.006 | 0.002 | 0.004 | 0.01 | 0.02 | 0.02 | 0.005 | 0.001 |
| I.Steel 2 | 0.21 | 1.1 | 1.8 | 0.2 | 0.027 | 0.007 | 0.003 | 0.003 | 0.01 | 0.025 | 0.02 | 0.01 | 0.0005 |
| I.Steel 3 | 0.19 | 1 | 1.7 | 0.25 | 0.025 | 0.006 | 0.003 | 0.005 | 0.1 | 0.015 | 0.02 | 0.005 | 0.001 |
| I.Steel 4 | 0.2 | 1.45 | 1.7 | 0.4 | 0.025 | 0.01 | 0.003 | 0.004 | 0.1 | 0.01 | 0.02 | 0.005 | 0.0005 |
| I.Steel 5 | 0.18 | 1.5 | 1.8 | 0.45 | 0.028 | 0.006 | 0.003 | 0.003 | 0.01 | 0.015 | 0.01 | 0.006 | 0.001 |
| I.Steel 6 | 0.19 | 1 | 2 | 0.35 | 0.032 | 0.006 | 0.002 | 0.004 | 0.01 | 0.03 | 0.025 | 0.005 | 0.0005 |
| * C. Steel: Comparative Steel, I.Steel: Inventive Steel ||||||||||||||

[Table 2]

| Specimen | Relational Ex. (1) | Relational Ex. (2) | Relational Ex. (3) | FDT (°C) | CT (°C) | Loading Temp. (°C) | Temp (°C) | Time (min.) |
|---|---|---|---|---|---|---|---|---|
| C.Steel 1 | 5.87 | 0.210 | 2308.0 | 883 | 379 | 203 | 300 | 280 |
| C.Steel 2 | 4.41 | 0.182 | 2077.6 | 889 | 319 | 211 | 300 | 240 |
| C.Steel 3 | 4.52 | 0.168 | 2093.8 | 897 | 296 | 216 | 300 | 600 |
| C.Steel 4 | 4.88 | 0.192 | 2174.0 | 901 | 228 | 165 | 280 | 900 |
| C.Steel 5 | 5.15 | 0.215 | 2913.9 | 892 | 383 | 220 | 350 | 900 |
| C.Steel 6 | 4.52 | 0.171 | 1630.1 | 909 | 382 | 250 | 250 | 180 |
| C.Steel 7 | 4.90 | 0.191 | 2266.3 | 900 | 430 | 300 | 300 | 600 |
| C.Steel 8 | 4.95 | 0.179 | 1735.5 | 914 | 120 | 85 | 250 | 300 |
| I.Steel 1 | 4.82 | 0.191 | 2115.9 | 910 | 265 | 226 | 280 | 600 |
| I.Steel 2 | 4.78 | 0.200 | 2242.4 | 917 | 383 | 313 | 300 | 300 |
| I.Steel 3 | 4.81 | 0.171 | 2026.8 | 903 | 307 | 257 | 300 | 300 |
| I.Steel 4 | 5.09 | 0.182 | 2201.4 | 898 | 328 | 274 | 300 | 600 |
| I.Steel 5 | 5.12 | 0.174 | 2112.4 | 912 | 379 | 315 | 300 | 500 |

(continued)

| Specimen | Relational Ex. (1) | Relational Ex. (2) | Relational Ex. (3) | FDT (°C) | CT (°C) | Loading Temp. (°C) | Temp (°C) | Time (min.) |
|---|---|---|---|---|---|---|---|---|
| I.Steel 6 | 5.02 | 0.178 | 2168.4 | 892 | 349 | 249 | 300 | 600 |
| * Relational Ex.: Relational Expression | | | | | | | | |

[Table 3]

| Specimen | YS (MPa) | TS (MPa) | T-El (%) | Bainite (%) | Martensite (%) | Ferrite (%) | Retained Austenite (%) |
|---|---|---|---|---|---|---|---|
| C.Steel 1 | 1255 | 1427 | 7.3 | 2 | 95 | 0 | 3 |
| C.Steel 2 | 765 | 986 | 16.5 | 26 | 72 | 1 | 1 |
| C.Steel 3 | 1021 | 1159 | 10.4 | 15 | 83 | 0 | 2 |
| C.Steel 4 | 1143 | 1406 | 7.8 | 2 | 98 | 0 | 0 |
| C.Steel 5 | 895 | 1055 | 14.0 | 9 | 89 | 0 | 2 |
| C.Steel 6 | 1010 | 1344 | 8.2 | 5 | 94 | 0 | 1 |
| C.Steel 7 | 654 | 889 | 18.3 | 75 | 20 | 3 | 2 |
| C.Steel 8 | 1180 | 1405 | 7.6 | 2 | 98 | 0 | 0 |
| I.Steel 1 | 1062 | 1209 | 12.1 | 0 | 92 | 0 | 8 |
| I.Steel 2 | 1108 | 1298 | 11.5 | 1 | 89 | 0 | 10 |
| I.Steel 3 | 1070 | 1244 | 11.2 | 1 | 94 | 0 | 5 |
| I.Steel 4 | 1195 | 1388 | 10.9 | 0 | 93 | 0 | 7 |
| I.Steel 5 | 1176 | 1354 | 10.4 | 1 | 93 | 0 | 6 |
| I.Steel 6 | 1189 | 1376 | 10.8 | 0 | 94 | 0 | 6 |

It is found that Inventive Steels 1 to 6 satisfying all of the alloy compositions, Relational Expressions 1 to 3, and manufacturing conditions had tensile strengths of 1200 MPa or more and elongations of 10% or more.

In the other hand, Comparative Steel 1 had a high value of Relational Expression 1 and did not satisfy the content of Cr. Accordingly, most of the microstructures of Comparative Steel 1 were formed as the martensite phase due to excessively high hardenability thereof. Comparative Steel 1 had low elongation while having high strength.

Comparative Steel 2 had a low value of Relational Expression 1, and thereby had low hardenability. Accordingly, Comparative Steel 2 did not have sufficient martensite and retained austenite phases since bainite phase transition occurred during the cooling process.

Comparative Steel 3 satisfied Relational Expression 1 and has sufficient hardenability. However, since it did not satisfy Relational Expression 2, the bainite phase increased while the stable retained austenite phase decreased. Accordingly, Comparative Steel 3 had a low strength.

Although Comparative Steel 4 satisfied all of Relational Expressions 1 to 3, it was loaded into the heating furnace and heated in a state the steel coiled after the hot-rolling and cooling were completed was cooled to a temperature lower than 200°C, the temperature suggested according to the present inventive concept. Accordingly, most of untransformed phases were transformed into the martensite phase, thereby having a low elongation while having a high strength.

Comparative Steel 5 had an abnormally high value of Relational Expression 3 and it was heated in the heating furnace at an excessively high temperature for an extended period of time after the cooling process. Accordingly, Comparative Steel 5 had a large amount of bainite phase while having a small amount of retained austenite phase. This was because portions of the retained austenite phase were not stabilized but transformed into the bainite phase. Therefore, Comparative Steel 5 did not have a sufficiently high strength.

Comparative Steel 6 had a low value of Relational Expression 3, and the retained austenite phase was not sufficiently stabilized but transformed into the bainite phase since temperature and time of the heat treatment were insufficient. Accordingly, Comparative Steel 6 had low ductility.

Comparative Steel 7 and Comparative Steel 8 did not satisfy the coiling temperature conditions. Comparative Steel 7 fabricated at a temperature higher than the coiling temperature suggested according to the present inventive concept had a microstructure mostly formed as the bainite phase and thereby had inferior strength. In addition, Comparative Steel 8 fabricated at a temperature lower than the coiling temperature suggested according to the present inventive concept had a microstructure mostly formed as the martensite phase and thereby had inferior elongation.

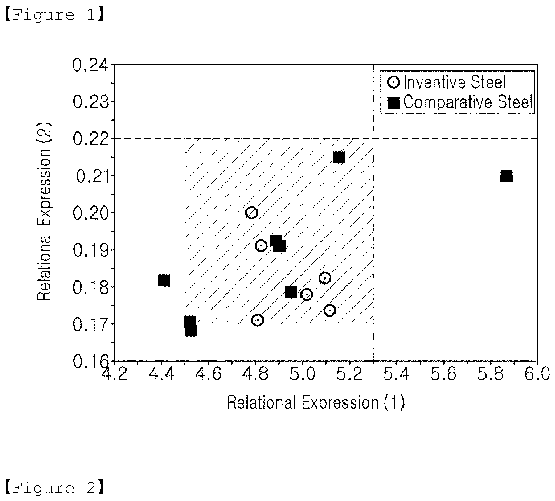

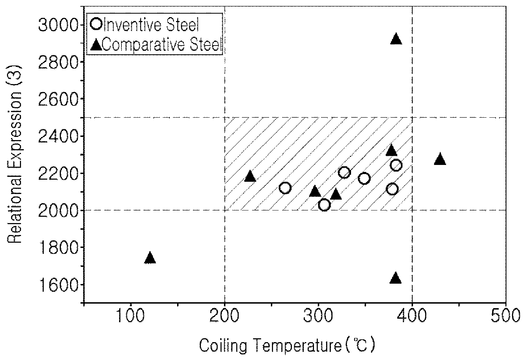

FIG. 1 is a graph illustrating values of Relational Expressions 1 and 2 in Inventive Steels and Comparative Steels, and FIG. 2 is a graph illustrating coiling temperatures and values of Relational Expression 3 in Inventive Steels and Comparative Steels. It can be seen that the present inventive concept is effective when Relational Expression 3, as well as Relational Expressions 1 and 2 related to the alloy compositions, are satisfied.

**Claims**

1. A ultra high strength hot-rolled steel sheet having excellent ductility, comprising:

   0.15% to 0.25% carbon (C), 0.6% to 2.0% silicon (Si), 1.5% to 3.0% manganese (Mn), 0.01% to 0.1% aluminum (Al), 0.01% to 0.5% chrome (Cr), 0.005% to 0.2% molybdenum (Mo), 0.001% to 0.05% phosphorus (P), 0.001% to 0.05% sulfur (S), 0.001% to 0.01% nitrogen (N), 0.003% to 0.1% niobium (Nb), 0.003% to 0.1% titanium (Ti), 0.003% to 0.1% vanadium (V), 0.0005% to 0.005% boron (B), a balance of iron (Fe) and unavoidable impurities, by weight percentage, and
   satisfying following relational expressions 1 and 2:

   $$[\text{Relational Expression 1}]$$
   $$4.5 \leq [\text{Mn}]+12[\text{sol.C}]+2.5[\text{Mo}]+2[\text{Cr}]+300[\text{B}]+[\text{V}] \leq 5.3$$

   $$[\text{Relational Expression 2}]$$
   $$[\text{sol.C}] = [\text{C}]-(0.25[\text{Ti}]+0.13[\text{Nb}]+0.125[\text{Mo}]), \ 0.17 \leq [\text{sol.C}] \leq 0.22,$$

   wherein sol.C refers to the solid solution carbon and a content of each element symbol represents a content in % by weight of the element in Relational Expression 1 and Relational Expression 2, and
   wherein a microstructure of the hot-rolled steel sheet includes 85% or more martensite, 3% to 15% retained austenite, and other unavoidable phases, by area fraction, and
   wherein the unavoidable phases include ferrite and bainite, and a sum of the ferrite and bainite is lower than 5% by area fraction, and
   wherein the hot-rolled steel sheet has a tensile strength of 1200 MPa or greater, and an elongation rate of 10% or greater, and the tensile strength was measured according to the method given in the description.

2. The ultra high strength hot-rolled steel sheet of claim 1, wherein the hot-rolled steel sheet further comprises a galvanized layer formed on a surface thereof.

3. A method of fabricating a ultra high strength hot-rolled steel sheet having excellent ductility, comprising:

   heating a slab at a temperature in a range between 1200°C and 1350°C, wherein the slab includes 0.15% to 0.25% carbon (C), 0.6% to 2.0% silicon (Si), 1.5% to 3.0% manganese (Mn), 0.01% to 0.1% aluminum (Al), 0.01% to 0.5% chrome (Cr), 0.005% to 0.2% molybdenum (Mo), 0.001% to 0.05% phosphorus (P), 0.001% to 0.05% sulfur (S), 0.001% to 0.01% nitrogen (N), 0.003% to 0.1% niobium (Nb), 0.003% to 0.1% titanium (Ti), 0.003% to 0.1% vanadium (V), 0.0005% to 0.005% boron (B), a balance of iron (Fe) and unavoidable impurities, by weight percentage, and satisfies the following relational expressions 1 and 2;
   forming a hot-rolled steel sheet by hot rolling the heated slab at a temperature in a range between 850°C and 1150°C;
   cooling the hot-rolled steel sheet to a cooling end temperature in a range between 200°C and 400°C at an average cooling rate of 50 to 100°C/s and coiling the cooled hot-rolled steel sheet; and
   loading the coiled hot-rolled steel sheet into a heating furnace to be heat-insulated or heated to a temperature in a range between 200°C to 400°C so as to satisfy the following relational expression 3,

[Relational Expression 1]
$$4.5 \leq [Mn]+12[sol.C]+2.5[Mo]+2[Cr]+300[B]+[V] \leq 5.3$$

[Relational Expression 2]
$$[sol.C] = [C]-(0.25[Ti]+0.13[Nb]+0.125[Mo]), \; 0.17 \leq [sol.C] \leq 0.22,$$

[Relational Expression 3]
$$T = Temp(25[sol.C] + Log(Time)), \; 2000 \leq T \leq 2500,$$

wherein sol.C refers to the solid solution carbon and a content of each element symbol represents a content in % by weight of the element in Relational Expression 1 and Relational Expression 2, and
the Temp and the Time represent a temperature in °C or time in minutes of the heating furnace after coiling in Relational Expression 3, and
wherein a microstructure of the hot-rolled steel sheet includes 85% or more martensite, 3% to 15% retained austenite, and other unavoidable phases, by area fraction, and
wherein the unavoidable phases includes ferrite and bainite, and a sum of the ferrite and bainite is lower than 5% by area fraction, and
wherein the hot-rolled steel sheet has a tensile strength of 1200 MPa or greater, and an elongation rate of 10% or greater, and the tensile strength was measured according to the method given in the description.

4. The method of claim 3, further comprising pickling and oiling the hot-rolled steel sheet after heat-insulating or heating.

5. The method of claim 3, further comprising heating the hot-rolled steel sheet until a temperature of the hot-rolled steel is in a range between 450°C to 480°C and hot-dip galvanizing the heated hot-rolled steel sheet, after pickling.

6. The method of claim 3, wherein the slab is fabricated in a process in which a continuous casting process and a hot-rolling process are directly combined.


**Patentansprüche**

1. Ultrahochfestes warmgewalztes Stahlblech mit hervorragender Duktilität, umfassend:

0,15 % bis 0,25 % Kohlenstoff (C), 0,6 % bis 2,0 % Silizium (Si), 1,5 % bis 3,0 % Mangan (Mn), 0,01 % bis 0,1 % Aluminium (Al), 0,01 % bis 0,5 % Chrom (Cr), 0,005 % bis 0,2 % Molybdän (Mo), 0,001 % bis 0,05 % Phosphor (P), 0,001 % bis 0,05 % Schwefel (S), 0,001 % bis 0,01 % Stickstoff (N), 0,003 % bis 0,1 % Niob (Nb), 0,003 % bis 0,1 % Titan (Ti), 0,003 % bis 0,1 % Vanadium (V), 0,0005 % bis 0,005 % Bor (B), einen Rest an Eisen (Fe) und unvermeidbare Verunreinigungen bezogen auf den Gewichtsprozentsatz, und
das die folgenden relationalen Ausdrücke 1 und 2 erfüllt:

[Relationaler Ausdruck 1]

$$4,5 \leq [Mn] + 12 \,[sol. \, C] + 2,5 \,[Mo] + 2 \,[Cr] + 300 \,[B] + [V] \leq 5,3$$

[Relationaler Ausdruck 2]

$$[sol. \, C] = [C] - (0,25 \,[Ti] + 0,13 \,[Nb] + 0,125 \,[Mo]), \; 0,17 \leq [sol. \, C] \leq 0,22,$$

wobei sich sol. C auf den Mischkristall-Kohlenstoff bezieht und ein Gehalt jedes Elementsymbols für einen Gehalt in Gew.-% des Elements in dem relationalen Ausdruck 1 und dem relationalen Ausdruck 2 steht, und
wobei eine Mikrostruktur des warmgewalzten Stahlblechs 85 % oder mehr Martensit, 3 % bis 15 % Restaustenit und andere unvermeidbare Phasen bezogen auf den Flächenanteil beinhaltet, und
wobei zu den unvermeidbaren Phasen Ferrit und Bainit gehören und eine Summe aus dem Ferrit und Bainit geringer ist als 5 % bezogen auf den Flächenanteil, und

wobei das warmgewalzte Stahlblech eine Zugfestigkeit von 1200 MPa oder mehr und eine Ausdehnungsrate von 10 % oder mehr aufweist und die Zugfestigkeit gemäß dem in der Beschreibung angegebenen Verfahren gemessen wurde.

2. Ultrahochfestes warmgewalztes Stahlblech nach Anspruch 1, wobei das warmgewalzte Stahlblech ferner eine galvanisierte Schicht umfasst, die auf einer Oberfläche davon ausgebildet ist.

3. Verfahren zum Herstellen eines ultrahochfesten warmgewalzten Stahlblechs mit hervorragender Duktilität, umfassend:

Erwärmen einer Bramme bei einer Temperatur in einem Bereich zwischen 1200 °C und 1350 °C, wobei die Bramme 0,15 % bis 0,25 % Kohlenstoff (C), 0,6 % bis 2,0 % Silizium (Si), 1,5 % bis 3,0 % Mangan (Mn), 0,01 % bis 0,1 % Aluminium (Al), 0,01 % bis 0,5 % Chrom (Cr), 0,005 % bis 0,2 % Molybdän (Mo), 0,001 % bis 0,05 % Phosphor (P), 0,001 % bis 0,05 % Schwefel (S), 0,001 % bis 0,01 % Stickstoff (N), 0,003 % bis 0,1 % Niob (Nb), 0,003 % bis 0,1 % Titan (Ti), 0,003 % bis 0,1 % Vanadium (V), 0,0005 % bis 0,005 % Bor (B), einen Rest an Eisen (Fe) und unvermeidbare Verunreinigungen bezogen auf den Gewichtsprozentsatz beinhaltet und die folgenden relationalen Ausdrücke 1 und 2 erfüllt;
Ausbilden eines warmgewalzten Stahlblechs durch Warmwalzen der erwärmten Bramme bei einer Temperatur in einem Bereich zwischen 850 °C und 1150 °C;
Abkühlen des warmgewalzten Stahlblechs auf eine Kühlendtemperatur in einem Bereich zwischen 200 °C und 400 °C bei einer mittleren Abkühlgeschwindigkeit von 50 bis 100 °C/s und Aufwickeln des abgekühlten warmgewalzten Stahlblechs; und
Laden des aufgewickelten warmgewalzten Stahlblechs in einen Wärmeofen, um auf eine Temperatur in einem Bereich zwischen 200 °C und 400 °C wärmeisoliert oder erwärmt zu werden, um den folgenden relationalen Ausdruck 3 zu erfüllen,

[Relationaler Ausdruck 1]

$$4,5 \leq [Mn] + 12\,[\text{sol. C}] + 2,5\,[Mo] + 2\,[Cr] + 300\,[B] + [V] \leq 5,3$$

[Relationaler Ausdruck 2]

$$[\text{sol. C}] = [C] - (0,25\,[Ti] + 0,13\,[Nb] + 0,125\,[Mo]),\ 0,17 \leq [\text{sol. C}] \leq 0,22,$$

[Relationaler Ausdruck 3]

$$T = \text{Temp.}\,(25\,[\text{sol. C}] + \text{Log(Zeit)}),\ 2000 \leq T \leq 2500,$$

wobei sich sol. C auf den Mischkristall-Kohlenstoff bezieht und
ein Gehalt jedes Elementsymbol für einen Gehalt in Gew.-% des Elements in dem relationalen Ausdruck 1 und dem relationalen Ausdruck 2 steht, und
die Temp. und die Zeit für eine Temperatur in °C oder eine Zeit in Minuten in dem Wärmeofen nach dem Aufwickeln im relationalen Ausdruck 3 stehen, und
wobei eine Mikrostruktur des warmgewalzten Stahlblechs 85 % oder mehr Martensit, 3 % bis 15 % Restaustenit und andere unvermeidbare Phasen bezogen auf den Flächenanteil beinhaltet, und
wobei zu den unvermeidbaren Phasen Ferrit und Bainit gehören und eine Summe aus dem Ferrit und Bainit geringer ist als 5 % bezogen auf den Flächenanteil, und
wobei das warmgewalzte Stahlblech eine Zugfestigkeit von 1200 MPa oder mehr und eine Ausdehnungsrate von 10 % oder mehr aufweist und die Zugfestigkeit gemäß dem in der Beschreibung angegebenen Verfahren gemessen wurde.

4. Verfahren nach Anspruch 3, ferner umfassend Beizen und Ölen des warmgewalzten Stahlblechs nach der Wärmeisolierung oder dem Erwärmen.

**5.** Verfahren nach Anspruch 3, ferner umfassend Erwärmen des warmgewalzten Stahlblechs, bis eine Temperatur des warmgewalzten Stahlblechs in einem Bereich zwischen 450 °C und 480 °C liegt und Feuerverzinken des erwärmten warmgewalzten Stahlblechs nach dem Beizen.

**6.** Verfahren nach Anspruch 3, wobei die Bramme in einem Prozess hergestellt wird, in dem ein Stranggussprozess und ein Warmwalzprozess direkt kombiniert sind.

**Revendications**

**1.** Tôle d'acier laminé à chaud à ultra-haute résistance présentant une excellente ductilité, comprenant : de 0,15 % à 0,25 % de carbone (C), de 0,6 % à 2,0 % de silicium (Si), de 1,5 % à 3,0 % de manganèse (Mn), de 0,01 % à 0,1 % d'aluminium (Al), de 0,01 % à 0,5 % de chrome (Cr), de 0,005 % à 0,2 % de molybdène (Mo), de 0,001 % à 0,05 % de phosphore (P), de 0,001 % à 0,05 % de soufre (S), de 0,001 % à 0,01 % d'azote (N), de 0,003 % à 0,1 % de niobium (Nb), de 0,003 % à 0,1 % de titane (Ti), de 0,003 % à 0,1 % de vanadium (V), de 0,0005 % à 0,005 % de bore (B), le reste étant du fer (Fe) et des impuretés inévitables, en pourcentage en poids, et satisfaisant les expressions de relation 1 et 2 suivantes :

```
[Expression de relation 1]
4,5 ≤ [Mn] + 12[sol.C] + 2,5[Mo] + 2[Cr] + 300[B] +
[V] ≤ 5,3

[Expression de relation 2]
[sol.C] = [C] - (0,25[Ti] + 0,13[Nb] + 0,125[Mo]),
0,17 ≤ [sol.C] ≤ 0,22,
```

dans laquelle sol.C désigne le carbone en solution solide, une teneur de chaque symbole d'élément représente une teneur en % en poids de l'élément dans l'Expression de relation 1 et l'Expression de relation 2, et
dans laquelle une microstructure de la tôle d'acier laminé à chaud comporte 85 % ou plus de martensite, de 3 % à 15 % d'austénite résiduelle, et autres phases inévitables, par fraction de surface, et
dans laquelle les phases inévitables comportent de la ferrite et de la bainite, et une somme de la ferrite et de la bainite est inférieure à 5 % par fraction de surface, et
dans laquelle la tôle d'acier laminé à chaud a une résistance à la traction de 1 200 MPa ou plus, et un taux d'allongement de 10 % ou plus, et la résistance à la traction a été mesurée selon le procédé donné dans la description.

**2.** Tôle d'acier laminé à chaud à ultra-haute résistance selon la revendication 1, dans laquelle la tôle d'acier laminé à chaud comprend en outre une couche galvanisée formée sur une surface de celle-ci.

**3.** Procédé de fabrication d'une tôle d'acier laminé à chaud à ultra-haute résistance présentant une excellente ductilité, comprenant :

le chauffage d'une brame à une température dans une plage comprise entre 1 200 °C et 1 350 °C, dans lequel la brame comporte de 0,15 % à 0,25 % de carbone (C), de 0,6 % à 2,0 % de silicium (Si), de 1,5 % à 3,0 % de manganèse (Mn), de 0,01 % à 0,1 % d'aluminium (Al), de 0,01 % à 0,5 % de chrome (Cr), de 0,005 % à 0,2 % de molybdène (Mo), de 0,001 % à 0,05 % de phosphore (P), de 0,001 % à 0,05 % de soufre (S), de 0,001 % à 0,01 % d'azote (N), de 0,003 % à 0,1 % de niobium (Nb), de 0,003 % à 0,1 % de titane (Ti), de 0,003 % à 0,1 % de vanadium (V), de 0,0005 % à 0,005 % de bore (B), le reste étant du fer (Fe) et des impuretés inévitables, en pourcentage en poids, et satisfait les expressions de relation 1 et 2 suivantes ;
la formation d'une tôle d'acier laminé à chaud par laminage à chaud de la brame chauffée à une température dans une plage comprise entre 850 °C et 1 150 °C ;
le refroidissement de la tôle d'acier laminé à chaud à une température de fin de refroidissement dans une plage comprise entre 200 °C et 400 °C à un taux de refroidissement moyen de 50 à 100 °C/s et le bobinage de la tôle d'acier laminé à chaud refroidie ; et

le chargement de la tôle d'acier laminé à chaud bobinée dans un four de réchauffage pour être isolé thermiquement ou chauffé à une température dans une plage comprise entre 200 °C et 400 °C de façon à satisfaire l'expression de relation 3 suivante,

[Expression de relation 1]

$4,5 \leq$ [Mn] + 12[sol.C] + 2,5[Mo] + 2[Cr] + 300[B] + [V] $\leq 5,3$

[Expression de relation 2]

[sol.C] = [C] − (0,25[Ti] + 0,13[Nb] + 0,125[Mo]), $0,17 \leq$ [sol.C] $\leq 0,22$,

[Expression de relation 3]

T = Temp(25[sol.C] + Log(Temps)), $2\ 000 \leq$ T $\leq 2\ 500$,

dans lequel sol.C désigne le carbone en solution solide, et
une teneur de chaque symbole d'élément représente une teneur en % en poids de l'élément dans l'Expression de relation 1 et l'Expression de relation 2, et
Temp et Temps représentent une température en °C ou un temps en minutes du four de réchauffage après bobinage dans l'Expression de relation 3, et
dans lequel une microstructure de la tôle d'acier laminé à chaud comporte 85 % ou plus de martensite, de 3 % à 15 % d'austénite résiduelle, et autres phases inévitables, par fraction de surface, et
dans lequel les phases inévitables comportent de la ferrite et de la bainite, et une somme de la ferrite et de la bainite est inférieure à 5 % par fraction de surface, et
dans lequel la tôle d'acier laminé à chaud a une résistance à la traction de 1 200 MPa ou plus, et un taux d'allongement de 10 % ou plus, et la résistance à la traction a été mesurée selon le procédé donné dans la description.

4. Procédé selon la revendication 3, comprenant en outre le décapage et l'huilage de la tôle d'acier laminé à chaud après isolation thermique ou chauffage.

5. Procédé selon la revendication 3, comprenant en outre le chauffage de la tôle d'acier laminé à chaud jusqu'à ce qu'une température de l'acier laminé à chaud soit dans une plage comprise entre 450 °C et 480 °C et la galvanisation à chaud au trempé de la tôle d'acier laminé à chaud chauffée, après décapage.

6. Procédé selon la revendication 3, dans lequel la brame est fabriquée dans un processus dans lequel un processus de coulée continue et un processus de laminage à chaud sont directement combinés.

【Figure 1】

【Figure 2】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2719788 A
- CN 201210461655
- CN 201210461022
- CN 201310121568

**Non-patent literature cited in the description**

- **J.G. SPEER.** *Colorado School of Mines*
- **J.G. SPEER ; D.V. EDMONDS ; F.C.RIZZO ; D.K.MATLOCK.** *Curr. Opin. Solid State Mater. Sci.,* 2004, vol. 8, 219-237
- **G.A. THOMAS ; J.G. SPEER ; D.K.MATLOCK.** *AIST Trans.,* 2008, vol. 5 (5), 209-217